# EUROPÄISCHE PATENTANMELDUNG

(11) **EP 2 713 499 A1**
(43) Veröffentlichungstag der Anmeldung: **02.04.2014**
(21) Anmeldenummer: 12186548.9
(22) Anmeldetag: 28.09.2012
(51) Int. Cl.: H02M 7/493, H02M 7/5387

(54) **Energieeinspeisevorrichtung mit symmetrischer Anbindung einer Gleichstrom-Quelle an einen geerdeten Sternpunkt eines Drehstromnetzes**

(71) Anmelder: Siemens Aktiengesellschaft, 80333 München (DE)
(72) Erfinder: Göpfrich, Kurt, 91058 Erlangen (DE)

(57) **Zusammenfassung**

Die Erfindung betrifft eine Energieeinspeisevorrichtung (1), welche zur effizienten und elektromagnetisch verträglichen Einspeisung einer von einer Gleichstrom-Quelle (16) bereitgestellten und insbesondere aus regenerativen Energiearten, wie beispielsweise Solarenergie erzeugten elektrischen Energie in ein Drehstromnetz (3) vorgesehen ist. Die dafür vorgeschlagene Energieeinspeisevorrichtung (1) besteht aus einem Drehstromnetz-Filter (9), der ausgehend von dessen Drehstromphasen (U,V,W) über jeweils eine Kapazität (C₁, C₂, C₃) einen Drehstromnetz-Sternpunkt (12) bildet, welcher mit einer weiteren Kapazität (C₄) zur Anbindung an ein Erdpotential (PE₁) vorgesehen ist, einem Wechselrichter (4), der zur Umrichtung einer mittels einer Kapazität (C₅) vorgeladenen Zwischenkreis-Gleichspannung (UDC₂) in entsprechende Wechselspannungen (UAC₁,UAC₂,UAC₃) vorgesehen ist, einem GleichspannungsWandler (7), der zur Wandlung einer Gleichspannung (UDC₁) in die Zwischenkreis-Gleichspannung (UDC₂) vorgesehen ist, einem Gleichstromnetz-Filter (10), der mittels zweier zwischen den Gleichstromphasen (DC+,DC-) angeordneter Kapazitäten (C₆,C₇) einen Abgriff für einen Gleichstromnetz-Sternpunkt (29) bildet, welcher über eine weitere Kapazität (C₈) zur Verbindung mit einem Erdpotential (PE₂) vorgesehen ist und einer Sternpunktkopplung (28) zwischen dem Gleichstromnetz-Sternpunkt (29) und dem Drehstromnetz-Sternpunkt (12), die zur symmetrischen Anbindung der Gleichstrom-Quelle (16) an den Drehstromnetz-Sternpunkt (12) vorgesehen ist.

## Beschreibung

Die Erfindung betrifft eine Energieeinspeisevorrichtung zur effizienten und elektromagnetisch verträglichen Einspeisung einer von einer Gleichstrom-Quelle in einem Gleichstromnetz bereitgestellten, insbesondere aus regenerativen Energiearten erzeugten elektrischen Energie in ein Drehstromnetz.

Eine solche Energieeinspeisevorrichtung kommt zum Einsatz, wenn elektrische Energie, welche immer öfter aus regenerativen Energiequellen, wie insbesondere der Solarenergie, gewonnen wird, in ein elektrisches Energienetz eingespeist wird. Die Einspeisung der so gewonnenen elektrischen Energie ist mit technischen Rahmenbedingungen verbunden, welche an die Einspeisevorrichtung eine Vielzahl von Anforderungen stellen. Solarsysteme speisen beispielsweise ihre mittels Solarmodulen erzeugte elektrische Energie im Allgemeinen in ein Gleichstromnetz. Energienetze, wie sie zur flächendeckenden Energieversorgung eingesetzt werden, sind in der Regel als dreiphasige Drehstromnetze ausgelegt. Eine effiziente Wandlung der elektrischen Energie ist an dieser Stelle eine Grundvoraussetzung. Die Energienetzbetreiber geben für einen stabilen Betrieb der elektrischen Energieversorgung technische Kenngrößen vor, wie beispielsweise Höhe der Spannung, Qualität der Sinusfunktion von Strom und Spannung, Phasenverschiebungswinkel und Netzfrequenz, welche für die Energieeinspeisung einzuhalten sind. Somit muss die Energieeinspeisevorrichtung in der Lage sein, die im Gleichstromnetz verfügbare Energie, unter Berücksichtigung der technischen Kenngrößen, in das Drehstromnetz zu überführen. Wirtschaftliche und technische Erwägungen legen nahe, bewährte Komponenten der Umrichtung und Einspeisung von elektrischer Energie auch für den Bereich der regenerativen Energiequellen einzusetzen und an das damit verbundene Umfeld anzupassen.

Eine wesentliche Komponente der in diesem Kontext benötigten Energieeinspeisevorrichtung ist der netzseitige Wechselrichter, welcher auch als Active Front End (AFE) bezeichnet wird. Er besitzt vorteilhafte Eigenschaften bezüglich der Erfüllung einiger der genannten Anforderungen zur Einspeisung von elektrischer Energie einer Gleichstrom-Quelle in ein Drehstromnetz. So können auf Seiten des Drehstromnetzes sinusförmige Ströme eingeprägt werden, was die Netzqualität erhöht. Weiterhin ist der Phasenverschiebungswinkel variabel einstellbar und die Zwischenkreis-Gleichspannung kann in Kombination mit einem Gleichspannungs-Wandlers, welcher auch als Hochsetzsteller bezeichnet wird, geregelt werden.

Aus DE 10 2006 016 502 A1 ist eine Energieeinspeisevorrichtung bekannt, welche insbesondere die Einspeisung von aus Solarenergie gewonnener elektrischer Energie ermöglicht. Sie besteht im Wesentlichen aus einem Hochsetzsteller, einem netzgeführten, gesteuerten Stromrichter und einem Filter am Drehstromnetz.

Einige von den eingangs genannten Anforderungen einer Energieeinspeisevorrichtung für Gleichstrom-Quellen werden von dieser Topologie erfüllt. Allerdings treten auch Nachteile beim Einsatz von Energieeinspeisetopologien dieser Art auf, wenn man berücksichtigt, dass der Spannungsbereich der Gleichstrom-Quelle meist stark eingeschränkt ist. So soll auch bei Reduzierung der Spannung der Gleichstrom-Quelle, beispielsweise wegen geringer Sonneneinstrahlung an den Solarsystemen, ein Maximum an Leistung zur Verfügung gestellt werden. Weiterhin kann die Zwischenkreis-Gleichspannung am Wechselrichter sehr stark gegenüber dem Erdpotential springen. Das belastet die elektronischen Bauteile im Wechselrichter bzw. erfordert eine höhere Auslegung dieser Bauteile.

Um diese Nachteile ansatzweise zu kompensieren, kommen eher aufwendige Lösungen zum Einsatz. Sie sehen für den beschriebenen Zusammenhang vor, dass über einen Transformator die Netzspannung heruntergesetzt und gleichzeitig eine galvanische Trennung vom Netz erreicht wird. Generell werden jedoch innovative Topologien für Energieeinspeisevorrichtungen mit dem Fokus der Einspeisung von Energie aus regenerativen Energiequellen benötigt. Beispielsweise Solarsysteme, welche ihre elektrische Energie in Form einer Gleichstrom-Quelle zur Verfügung stellen, sind technisch zuverlässige Energieerzeuger und werden vielfach eingesetzt. Aus dieser Art der Bereitstellung von elektrischer Energie ergeben sich die eingangs erwähnten spezifische Anforderungen an die Energieeinspeisung in Drehstromnetze, die erfüllt werden müssen. Ein weiterer wichtiger Aspekt für diese Art von Energieeinspeisevorrichtungen ist die Sicherstellung der elektromagnetischen Verträglichkeit nicht nur im industriellen Umfeld sondern beispielsweise auch für mittlere und kleine Anwendungen in der Gebäudetechnik. Dies soll allerdings mit einem wirtschaftlich vertretbaren Aufwand beim Einsatz von Material und Installationsleistungen bzgl. abschirmungstechnischer Maßnahmen zur elektromagnetischen Verträglichkeit geschehen.

Der Erfindung liegt die Aufgabe zugrunde, eine Energieeinspeisevorrichtung der eingangs genannten Art anzugeben, deren Topologie und damit verbundener Wirkungsweise es ermöglicht, die von einer Gleichstrom-Quelle in einem Gleichstromnetz bereitgestellten und insbesondere aus regenerativen Energiearten erzeugten elektrischen Energie, effizient und elektromagnetisch verträglich in ein Drehstromnetz einzuspeisen.

Diese Aufgabe wird durch eine Energieeinspeisevorrichtung zur effizienten und elektromagnetisch verträglichen Einspeisung einer von einer Gleichstrom-Quelle in einem Gleichstromnetz bereitgestellten und insbesondere aus regenerativen Energiearten erzeugten elektrischen Energie in ein Drehstromnetz, aufweisend einen Drehstromnetz-Filter im Drehstromnetz, der ausgehend von dessen Drehstromphasen über jeweils eine Kapazität einen Drehstromnetz-Sternpunkt bildet, welcher mit einer weiteren Kapazität zur Anbindung an ein Erdpotential vorgesehen ist, einen Wechselrichter, der zur Umrichtung einer mittels einer Kapazität vorgeladenen Zwischenkreis-Gleichspannung eines Gleichspannungs-Zwischenkreises in entsprechende Wechselspannungen des Drehstromnetzes vorgesehen ist, einen Gleichspannungs-Wandler , der zur Wandlung einer Gleichspannung des Gleichstromnetzes in die Zwischenkreis-Gleichspannung des Gleichspannungs-Zwischenkreises vorgesehen ist, einen Gleichstromnetz-Filter im Gleichstromnetz, der mittels zweier zwischen den Gleichstromphasen angeordneter Kapazitäten einen Abgriff für einen Gleichstromnetz-Sternpunkt bildet, welcher über eine weitere Kapazität zur Verbindung mit einem Erdpotential vorgesehen ist und eine Sternpunktkopplung zwischen dem Gleichstromnetz-Sternpunkt und dem Drehstromnetz-Sternpunkt, die zur symmetrischen Anbindung der Gleichstrom-Quelle im Gleichstromnetz an das Drehstromnetz vorgesehen ist, gelöst.

Der Erfindung liegt die Erkenntnis zu Grunde, dass eine Energieeinspeisevorrichtungen alle Anforderungen der Einspeisung von aus einer Gleichstrom-Quelle bereitgestellter, insbesondere regenerativer elektrischer Energie in ein Drehstromnetz effizient, sicher und mit wirtschaftlich vertretbarem Aufwand erfüllen muss. Energieeinspeisevorrichtungen, welche als Gleichstrom-Quelle beispielsweise Solarenergie in ein Drehstromnetz einspeisen, werden oft dezentral und außerhalb industrieller Anlagen installiert und betrieben. Einsatzgebiete sind dann u.a. kommerziell wie auch nicht kommerziell genutzte Gebäude. Dafür werden neue Energieeinspeisevorrichtungen benötigt, deren Einzelkomponenten wie Wechselrichter, Filter, Gleichspannungs-Wandler, etc. für derartige Einsatzgebiete angepasst bzw. neu entwickelt werden. Mittels einer derartigen anwendungsorientierten Topologie ist es möglich, kompakte, modular aufgebaute und einfach zu betreibenden/ zu wartende Energieeinspeisevorrichtungen als Gesamtsysteme bereitzustellen. Ziel ist es, möglichst alle Vorteile der Einzelkomponenten in die Energieeinspeisevorrichtung einzubringen, auftretende Nachteile zu beseitigen und weitere spezifische Anforderungen, wie beispielsweise die elektromagnetische Verträglichkeit, zu berücksichtigen. Als ein Nachteil bekannter Energieeinspeisevorrichtungen, welche die genannten Einzelkomponenten teilweise oder vollständig einsetzen, gilt das "Springen" der Zwischenkreis-Gleichspannung am Gleichspannungs-Zwischenkreis gegenüber dem Erdpotential. Ein weiterer Nachteil für die bekannten Energieeinspeisevorrichtungen ist die Tatsache, dass die Gleichstrom-Quellen als Energielieferant meist einen stark eingeschränkten Spannungsbereich aufweisen, der bisher nur sehr aufwendig auszugleichen war. Mittels der erfindungsgemäßen Energieeinspeisevorrichtung werden die beschriebenen Nachteile beseitigt werden.

Um dem Wechselrichter der Energieeinspeisevorrichtung eine möglichst unabhängig vom teilweise eingeschränkten Spannungsbereich der Gleichstrom-Quelle anliegende Zwischenkreis-Gleichspannung zur Verfügung zu stellen, übernimmt ein Gleichspannungs-Wandler, der zwischen Gleichstrom-Quelle und Wechselrichter eingefügt wird, die dafür notwendige Regelung. Der Gleichspannungs-Wandler verfügt über einen Stromregler, welcher getaktet einen aktiven Leistungshalbleiter schaltet, der zwischen den beiden Gleichstromphasen kurzzeitig eine Verbindung herstellt. Der daraus resultierende, zeitlich begrenzt anstehende Kurzschluss zwischen den beiden Gleichstromphasen treibt einen Strom durch die jeweiligen Induktivitäten der Gleichstromphasen im Gleichspannungs-Wandler. Nach jeder Abschaltung des aktiven Leistungshalbleiters erhöht sich das Potential der Zwischenkreis-Gleichspannung gegenüber der Gleichspannung der Gleichspannungs-Quelle am Gleichstromkreis. In dieser Betriebsart kann der Gleichspannungs-Wandler auch als sogenannter Hochsetzsteller bezeichnet werden. Am Wechselrichter liegt nun eine, mittels einer Zwischenkreis-Kapazität vorgeladene Zwischenkreis-Gleichspannung an. Eine Wechselrichter-Regelung erzeugt aus der Zwischenkreis-Gleichspannung durch getaktete Ansteuerung von aktiven Leistungshalbleitern eine dreiphasige Wechselspannung für das netzseitig am Wechselrichter anliegende Drehstromnetz. Der Wechselrichter führt einen von der Wechselrichter-Reglung geregelten Wechselstrom durch die jeweiligen Induktivitäten seiner Drehstromphasen. Das Potential der Zwischenkreis-Gleichspannung wird auf das Potential der Wechselspannung des Drehstromnetzes heruntergesetzt. Damit arbeitet der Wechselrichter als sogenannter Tiefsetzsteller. Die im Wechselrichter wie auch im Gleichspannungs-Wandler eingesetzten aktiven Leistungshalbleiter sind mit jeweils einem antiparallel verschalteten, passiven Leistungshalbleiter, insbesondere einer Diode verbunden. Diese Kombination von aktivem und passivem Leistungshalbleiter ist oft als ein Modul verfügbar. Für die im Wechselrichter und im Gleichspannungs-Wandler der Energieeinspeisevorrichtung betrachteten aktiven Leistungshalbleiter kommt diese Kombination zum Einsatz. Aufgrund der Anforderungen der Netzbetreiber an eine hohe elektrischen Qualität der eingespeisten Energie in ihr Netz und den damit verbundenen Auflagen an die elektromagnetische Verträglichkeit muss die Energieeinspeisevorrichtung ihre Netzseite von den störenden elektromagnetischen Einflüssen der geschalteten aktiven Leistungshalbleiter des Wechselrichters isolieren. Dies wird durch die Einbringung eines Drehstromnetz-Filters zwischen Wechselrichter und Drehstromnetz erreicht. Dabei ist der Drehstromnetz-Filter möglichst nahe am Wechselrichter anzuordnen. Die im Drehstromnetz-Filter enthaltenen Kapazitäten, welche einerseits mit jeweils einer Drehstromphase des Drehstromnetzes verbunden und anderseits an einem Drehstromnetz-Sternpunkt über eine weitere Kapazität mit dem Erdpotential verbunden sind, filtern unerwünschte Oberwellen bzw. Spitzen der Wechselspannung am Drehstromnetz heraus. Der Einsatz des Drehstromnetz-Filters ermöglicht somit ein sehr hochfrequentes Schalten der aktiven Leistungshalbleiter des Wechselrichters. Um die Energieeinspeisevorrichtung vollständig elektromagnetisch verträglich zu gestalten, ist auch der aktive Leistungshalbleiter des Gleichspannungs-Wandlers in Richtung der Gleichspannungsquelle elektromagnetisch isoliert. Ein Gleichstromnetz-Filter wird dafür zwischen die Gleichstrom-Quelle und möglichst nahe an den Gleichspannungs-Wandler in das Gleichstromnetz eingefügt. Er besteht aus zwei Kapazitäten, die einerseits mit den Gleichstromphasen des Gleichstromnetzes und andererseits an einem Gleichstrom-Sternpunkt über eine weitere Kapazität mit Erdpotential verbunden sind. Durch diese Maßnahme wird der Gleichspannungs-Wandler in Richtung des Gleichstrom-Netzes elektromagnetisch isoliert und das hochfrequentes Schalten seines aktiven Leistungshalbleiters ermöglicht. Aufgrund der elektromagnetisch isolierenden Wirkung, welche die Energieeinspeisevorrichtung durch den Drehstromnetz-Filter zum Drehstromnetz und den Gleichstromnetz-Filter zum Gleichstromnetz erzeugt, ist ein weiterer Vorteil der Verzicht auf geschirmte Leitungen, insbesondere geschirmte Leitungen für den Leistungsteil. Ein nächster wesentlicher Vorteil der erfindungsgemäßen Energieeinspeisevorrichtung wird durch eine Sternpunktkopplung des Drehstrom-Sternpunkts im Drehstromnetz-Filter mit dem Gleichstrom-Sternpunkt im Gleichstromnetz-Filter erreicht. Ziel ist es, ein Springen der Zwischenkreis-Gleichspannung gegenüber dem Erdpotential zu verhindern. Aufgrund der Sternpunktkopplung wird somit die Gleichspannung der am Gleichstromnetz befindlichen Gleichstrom-Quelle symmetrisch an den mit dem Erdpotential verbundenen Drehstrom-Sternpunkt angebunden. Diese Symmetrierung der Gleichspannung im Gleichstromkreis setzt sich als Symmetrierung der Zwischenkreis-Gleichspannung fort. Sie wird mittels der in der Wechselrichter-Regelung des Wechselrichters implementierten Phasenstromregelung erreicht, indem über die Sternpunktkopplung ein ausgleichender Strom zwischen Drehstromnetz-Sternpunkt im Drehstromnetz-Filter und Gleichstromnetz-Sternpunkt im Gleichstromnetz-Filter fließt.

Vorteilhafte Ausgestaltungen der Erfindung sind in den abhängigen Ansprüchen gegeben.

Bei einer vorteilhaften Ausgestaltungsform der Energieeinspeisevorrichtung ist im Wechselrichter am Gleichspannungs-Zwischenkreises eine Vorladeerweiterung vorgesehen, die eine Parallelschaltung aus einem Vorladewiderstand und einem insbesondere von der Wechselrichter-Regelung des Wechselrichters ansteuerbaren Überbrückungsrelais-Schaltkontakt aufweist und in Reihe mit der Kapazität zwischen den beiden Gleichstromphasen des Gleichspannungs-Zwischenkreises im Wechselrichter liegt. Die Vorladeerweiterung ermöglicht eine Begrenzung des Stromes im Gleichspannungs-Zwischenkreis sowohl beim Zuschalten des Gleichstromnetzes als auch beim Zuschalten des Drehstromnetzes mittels des Vorladewiderstand. Nach einem definierten Vorladungszustand der Kapazität im Gleichspannungs-Zwischenkreis, der keinen überhöhten Stromfluss mehr zulässt, wird mittels des Überbrückungsrelais-Schaltkontakts der Vorladewiderstand überbrückt.

Bei einer weiteren vorteilhaften Ausgestaltungsform der Energieeinspeisevorrichtung sind in den Drehstromphasen des Wechselrichters integrierte Strommesspunkte zur Messung der entsprechenden Wechselströme für die Wechselrichter-Regelung vorgesehen, was keine externe Beschaltung von Strommessungen am Drehstromnetz notwendig macht. Bzgl. der Leitungen zwischen den Strommesspunkten und der Wechselrichter-Regelung kann vorteilhaft auf geschirmte Leitungen verzichtet werden, da die Anbringung der Drehstromnetz-Filter nahe am Wechselrichter vorgesehen und damit die elektromagnetische Verträglichkeit sichergestellt ist.

Bei einer weiteren vorteilhaften Ausgestaltungsform der Energieeinspeisevorrichtung sind im Wechselrichter für die aktiven Leistungshalbleiter SiC-JFETs (Silicium Carbide - Junction Gate Field Effect Transistor) und/oder SiC-MOSFETs (Silicium Carbide - Metal Oxide Semiconductor Field Effect Transistor) als hochfrequent schaltbare, aktive Leistungshalbleiter vorgesehen, die von der Wechselrichter-Regelung angesteuert werden. Diese vorteilhaften Arten von sehr leistungsfähigen aktiven Leistungshalbleiter können aufgrund der elektromagnetischen Isolierung der Energieeinspeisevorrichtung gegenüber dem Drehstromnetz durch die nahe Ankopplung des Drehstromnetz-Filters an den Wechselrichter zum Einsatz kommen, ohne störende elektrische Einflüsse an das Drehstromnetz bzw. die Umgebung abzugeben.

Bei einer weiteren vorteilhaften Ausgestaltungsform der Energieeinspeisevorrichtung sind in den Gleichstromphasen des Gleichspannungs-Wandlers Strommesspunkte zur Messung der entsprechenden Gleichströme für die Stromregelung vorgesehen, was keine externe Beschaltung von Strommessungen am Gleichstromnetz notwendig macht. Bzgl. der Leitungen zwischen den Strommesspunkten und der Stromregelung kann vorteilhaft auf geschirmte Leitungen verzichtet werden, da die Anbringung der Gleichstromnetz-Filter nahe am Wechselrichter vorgesehen und damit die elektromagnetische Verträglichkeit sichergestellt ist.

Bei einer weiteren vorteilhaften Ausgestaltungsform der Energieeinspeisevorrichtung ist für die Stromregelung des Gleichspannungs-Wandlers ein Hysterese-Stromregler vorgesehen. Dieser Hysterese-Stromregler vermeidet Stromspitzen insbesondere in den passiven Leistungshalbleitern der Gleichstromphasen des Gleichspannungs-Wandler durch die spezifische Art Ansteuerung des aktiven Leistungshalbleiters des Gleichspannungs-Wandlers.

Bei einer weiteren vorteilhaften Ausgestaltungsform der Energieeinspeisevorrichtung ist im Gleichspannungs-Wandler für den aktiven Leistungshalbleiter ein SiC-JFETs oder ein SiC-MOSFETs als hochfrequent schaltbarer, aktiver Leistungshalbleiter vorgesehen, der von der Stromregelung angesteuert wird. Diese vorteilhaften Arten von sehr leistungsfähigen aktiven Leistungshalbleiter können aufgrund der elektromagnetischen Isolierung der Energieeinspeisevorrichtung gegenüber dem Gleichstromnetz durch die nahe Ankopplung des Gleichstromnetz-Filters an den Gleichspannungs-Wandler zum Einsatz kommen, ohne störende elektrische Einflüsse an das Gleichstromnetz bzw. die Umgebung abzugeben.

Bei einer weiteren vorteilhaften Ausgestaltungsform der Energieeinspeisevorrichtung ist mindestens eine weitere Gleichstrom-Quelle in ihrem jeweiligen Gleichstromnetz über einen weiteren Gleichstromnetz-Filter und einen weiteren Gleichspannungs-Wandler für einen Parallelbetrieb der Gleichstrom-Quellen an dem Gleichstrom-Zwischenkreis des Wechselrichters vorgesehen. Dabei werden die entsprechenden Gleichstromnetz-Sternpunkte über die Sternpunktkopplung mit dem Drehstrom-Sternpunkt verbunden. Der Parallelbetrieb wird weiterhin effizient unterstützt, wenn die Stromregelung des Gleichspannungs-Wandlers mittels der Hysterese-Stromregler durchgeführt wird.

Bei einer weiteren vorteilhaften Ausgestaltungsform der Energieeinspeisevorrichtung ist eine übergeordnete Maximum-Power-Point-Regelung (MPP), welche zur Findung und Ausregelung des Punktes der maximalen Leistung von Gleichstrom-Quellen am Gleichstromnetz eingesetzt wird, für die Vorgabe eines Stromsollwerts an die Stromreglung des Gleichspannungs-Wandler vorgesehen. Mittels dieser Maximum-Power-Point-Regelung lässt sich die Leistungsbilanz der Abgabe von elektrischer Energie an das Drehstromnetz, welche beispielsweise aus Solarsystemen gewonnen wird, in Kombination mit der erfindungsgemäßen Energieeinspeisevorrichtung weiter erhöhen. Die Maximum-Power-Point-Regelung kann sowohl als extern von der Energieeinspeisevorrichtung realisierte Regelung ausgeführt sein, aber auch als integraler Bestandteil einer der Regelungen der Energieeinspeisevorrichtung implementiert werden.

Bei einer weiteren vorteilhaften Ausgestaltungsform der Energieeinspeisevorrichtung wird deren erfindungsgemäße Topologie und die damit verbundene Möglichkeit genutzt, elektrische Energie aus dem Drehstromnetz aufzunehmen und in das Gleichstromnetz einzuspeisen. Die Gewinnung von elektrischer Energie aus beispielsweise Solarsystemen ist meist über einen betrachteten Zeitraum nicht konstant zu gewährleisten. Auch kann nicht zu jedem Zeitpunkt sichergestellt werden, dass im Drehstromnetz genügend Bedarf für die Einspeisung der aus dem Gleichstromnetz bereitgestellten elektrische Energie besteht. Daher werden die entsprechenden Gleichstrom-Quellen im Gleichstromnetz mit einem elektrischen Energiespeicher verbunden, welcher als Puffer wirkt. Je nach Verfügbarkeit bzw. Abnahmesituation der von der Gleichstrom-Quelle bereitgestellten elektrischen Energie besteht zusätzlich die Notwendigkeit, den elektrischen Energiespeicher über die Zufuhr mit elektrischer Energie aus dem Drehstromnetz aufzuladen. Zu einem späteren Zeitpunkt kann diese Energie im Bedarfsfall in das Gleichstromnetz oder mittels der Energieeinspeisevorrichtung wieder in das Drehstromnetz abgegeben werden. Die Energieeinspeisevorrichtung ist somit vorteilhaft in der Lage, je nach Bedarf elektrische Energie bidirektional zwischen dem Gleichstromnetz und dem Drehstromnetz zu transportieren.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: ein erstes Schaltbild mit der Topologie einer erfindungsgemäßen Energieeinspeisevorrichtung zur Einspeisung einer insbesondere aus regenerativen Energiearten gewonnenen elektrischen Energie einer Gleichstrom-Quelle in ein Drehstromnetz,
- FIG 2: ein weiteres Schaltbild der Energieeinspeisevorrichtung entsprechend FIG 1, wobei die angeschlossene Gleichstrom-Quelle aus einem Solarsystem und einem elektrischen Energiespeicher besteht, die Stromregelung des Gleichspannungs-Wandlers als Hysterese-Stromregler ausgeführt und mit einer Maximum-Power-Point-Regelung verbunden ist und eine Vorladeerweiterung in einem Gleichspannungs-Zwischenkreis eines Wechselrichters enthalten ist und
- FIG 3: ein weiteres Schaltbild der Energieeinspeisevorrichtung entsprechend FIG 1, welches einen Parallelbetrieb von mindestens einer weiteren Gleichstrom-Quelle zur Einspeisung von aus regenerativen Energiearten gewonnener elektrischer Energie in das Drehstromnetz darstellt.

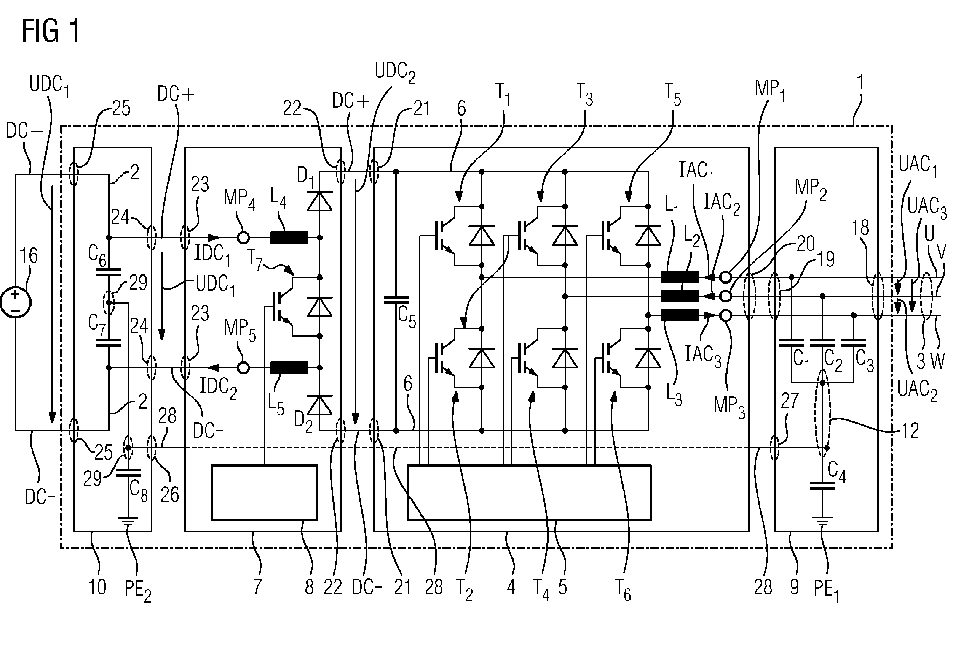

FIG 1 zeigt ein erstes Schaltbild mit der Topologie einer erfindungsgemäßen Energieeinspeisevorrichtung 1 zur Einspeisung einer insbesondere aus regenerativen Energiearten gewonnenen elektrischen Energie einer Gleichstrom-Quelle 16 in ein Drehstromnetz 3. Der modulare Aufbau der Energieeinspeisevorrichtung 1 besteht hauptsächlich aus einem Gleichstromnetz-Filter 10, einem Gleichspannungs-Wandler 7, einem Wechselrichter 4 und einem Drehstromnetz-Filter 9. Die elektrische Anschaltung der Gleichstrom-Quelle 16 in einem Gleichstromnetz 2 an das Drehstromnetz 3 beginnt mit der Verbindung der beiden Gleichstromphasen DC+, DC- des Gleichstromnetzes 2 an einen zweiten Anschluss 25 des Gleichstromnetz-Filters 10 der Einspeisevorrichtung 1, wobei eine Gleichspannung UDC₁ anliegt. Ein erster Ausgang 24 des Gleichstromnetz-Filters 10 ist mittels der beiden Gleichstromphasen DC+, DC- mit einem zweiten Ausgang 23 des Gleichspannungs-Wandlers 7 verbunden, wobei ebenfalls die Gleichspannung UDC₁ anliegt. Ein erster Ausgang 22 des Gleichspannungs-Wandlers 7 ist mittels der beiden Gleichstromphasen DC+, DC- mit einem zweiten Anschluss 21 des Wechselrichters 4 verbunden. An dem so entstandenen Gleichspannungs-Zwischenkreis 6 liegt eine Zwischenkreis-Gleichspannung UDC₂ an. Ein erster Anschluss 20 des Wechselrichters 4 ist mittels dreier Drehstromphasen U, V, W mit einem zweiten Anschluss 19 des Drehstromnetz-Filters 9 verbunden, wobei zwischen jeweils zwei beliebigen Drehstromphasen U, V, W eine der entsprechenden Wechselspannungen UAC₁, UAC₂, UAC₃ anliegt. Ein erster Anschluss 18 des Drehstromnetz-Filters 9 ist mittels der drei Drehstromphasen U,V,W mit dem Drehstromnetz 3 verbunden, wobei hier ebenfalls zwischen jeweils zwei beliebigen Drehstromphasen U, V, W die entsprechenden Wechselspannungen UAC₁, UAC₂, UAC₃ anliegen.

Mit Bezug auf FIG 1 wird der Aufbau und die Arbeitsweise der einzelnen Komponenten der Energieeinspeisevorrichtung 1 sowie deren gemeinsame Wirkung zur Energieeinspeisung nachfolgend erläutert. Der Gleichstromnetz-Filter 10 am Gleichstromnetz 2 besteht aus zwei zwischen den Gleichstromphasen DC+, DC- angeordneten Kapazitäten C₆, C₇, die einen Abgriff für einen Gleichstromnetz-Sternpunkt 29 bilden, welcher über eine weitere Kapazität C₈ zur Verbindung mit einem Erdpotential PE₂ vorgesehen ist. Die hauptsächliche Aufgabe des Gleichstromnetz-Filters 10 ist es, die Gleichstrom-Quelle 16 im Gleichstromnetz 2 bzgl. elektromagnetischer Einflüsse der Energieeinspeisevorrichtung 1 zu isolieren und somit die elektromagnetische Verträglichkeit sicherzustellen. Auf eine Abschirmung der elektrischen Leitungen der Gleichstromphasen DC+, DC- kann im Gleichstromnetz 2 verzichtet werden. Der mit dem Gleichstromnetz-Filter 10 verbundene Gleichspannungs-Wandler 7 wandelt die Gleichspannung UDC₁ der Gleichstrom-Quelle 16 in eine Zwischenkreis-Gleichspannung UDC₂ am Gleichspannungs-Zwischenkreis 6. Dazu wird das Potential der Gleichspannung UDC₁ auf das Potential der Zwischenkreis-Gleichspannung UDC₂ angehoben. Dies geschieht, indem ein aktiver Leistungshalbleiter T₁, welcher zwischen den Gleichstromphasen DC+, DCvorgesehen ist, mittels einer Stromregelung 8 gesteuert ein- und ausgeschaltet wird. Während eines kurzen Zeitraumes entsteht ein kontrollierter Kurzschluss zwischen den Gleichstromphasen DC+, DC-, welcher jeweils einen Gleichstrom IDC₁, IDC₂ durch zwei Induktivitäten L₄, L₅ in den entsprechenden Gleichstromphasen DC+, DC- treibt. Die Abschaltung des aktiven Leistungshalbleiters T₁ erhöht das Potential der Zwischenkreis-Gleichspannung UDC₂ gegenüber der Gleichspannung UDC₁. Am Wechselrichter 4 liegt nun eine Zwischenkreis-Gleichspannung UDC₂ an, mittels der eine Zwischenkreis-Kapazität C₅ für die Energieabgabe an das Drehstromnetz 3 vorgeladen wird. Eine Wechselrichter-Regelung 5 erzeugt aus der Zwischenkreis-Gleichspannung UDC₂ durch getaktetes Schalten von aktiven Leistungshalbleitern T₁, T₂, T₃, T₄, Tₛ, T₆ die entsprechenden Wechselspannungen UAC₁, UAC₂, UAC₃ an den netzseitig am Wechselrichter 4 anliegenden Drehstromphasen U, V, W sowie die darin fließenden Wechselströme IAC₁, IAC₂, IAC₃. In den Drehstromphasen U, V, W ist jeweils eine Induktivität L₁, L₂, L₃ vorgesehen, die das Potential der Zwischenkreis-Gleichspannung UDC₂ auf das Potential der jeweiligen Wechselspannungen UAC₁, UAC₂, UAC₃ im Drehstromnetz 3 herabsetzt. Um die Energieeinspeisevorrichtung 1 bzgl. der elektromagnetischen Verträglichkeit gegenüber dem Drehstromnetz 3 zu isolieren, wird der Drehstromnetz-Filter 9 in die Drehstromphasen U, V, W zwischen Wechselrichter 4 und Drehstromnetz 3 eingebunden. Im Drehstromnetz-Filter 9 ist ausgehend von dessen Drehstromphasen U, V, W jeweils eine Kapazität C₁, C₂, C₃ mit einem Drehstromnetz-Sternpunkt 12 verbunden, welcher mittels einer weiteren Kapazität C₄ an ein Erdpotential PE₁ angeschlossen ist. Auf eine Abschirmung der elektrischen Leitungen der Drehstromphasen U, V, W kann im Drehstromnetz 3 verzichtet werden. Die symmetrische Anbindung der Gleichstrom-Quelle 16 an das Drehstromnetz 3 wird durch eine Sternpunktkopplung 28 des Gleichstromnetz-Sternpunkt 29 im Gleichstromnetz-Filter 10 mit dem Drehstromnetz-Sternpunkt 12 im Drehstromnetz-Filter 9 erreicht. Die für die Wechselrichter-Regelung 5 des Wechselrichters 4 notwendigen Messwerte der Wechselströme IAC₁, IAC₂, IAC₃ in den Drehstromphasen U, V, W werden an den entsprechenden Strommesspunkten MP₁, MP₂, MP₃ nahe am Drehstromnetz-Filter 9 abgegriffen. Die für die Stromregelung 8 des Gleichspannungs-Wandler 7 notwendigen Messwerte der Gleichströme IDC₁, IDC₂ in den Gleichstromphasen DC+, DC- werden an den entsprechenden Strommesspunkten MP₄, MP₅ nahe am Gleichstromnetz-Filter 10 abgegriffen. Auf eine Abschirmung der elektrischen Leitungen für den Abgriff der Messwerte der Wechselströme IAC₁, IAC₂, IAC₃ und der Gleichströme IDC₁, IDC₂ kann aufgrund der elektromagnetisch isolierenden Wirkung des Drehstromnetz-Filters 9 und des Gleichstromnetz-Filters 10 gegenüber insbesondere den aktiven Leistungshalbleitern T₁, T₂, T₃, T₄, T₅, T₆, T₇ verzichtet werden.

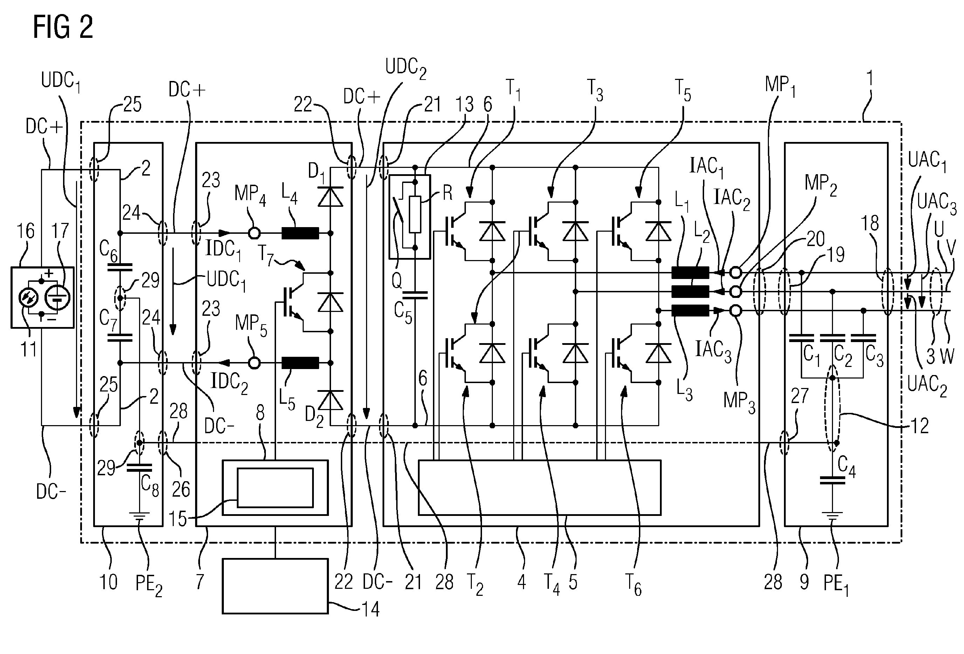

FIG 2 zeigt ein weiteres Schaltbild der Energieeinspeisevorrichtung 1 entsprechend FIG 1, wobei die angeschlossene Gleichstrom-Quelle 16 aus einem Solarsystem 17 und einem elektrischen Energiespeicher 11 besteht, die Stromregelung 8 des Gleichspannungs-Wandlers 7 als Hysterese-Stromregler 15 ausgeführt und mit einer Maximum-Power-Point-Regelung 14 verbunden ist und eine Vorladeerweiterung 13 in einem Gleichspannungs-Zwischenkreis 6 eines Wechselrichters 4 enthalten ist. Entsprechend dem Ausführungsbeispiel in FIG 2 ist die Einspeisung von elektrischer Energie speziell der Energieeinspeisevorrichtung 1 auf die Energiegewinnung mittels eines Solarsystems 17 abgestimmt. Es ist von Vorteil, das Solarsystem 17 aufgrund seiner Einsatz- bzw. seiner Betriebsweise mit elektrischen Energiespeichern 11 zu koppeln und diesen als Puffer zu benutzen. Die Energieeinspeisevorrichtung 1 ist in der Lage, je nach Bedarf und Betriebsart den elektrischen Energiespeicher 11 aus dem Drehstromnetz 3 aufzuladen. Um ein Maximum an elektrischer Energie aus dem Solarsystem 17 zu generieren und mittels der Energieeinspeisevorrichtung 1 in das Drehstromnetz 3 einzuspeisen, ist eine autarke Maximum-Power-Point-Regelung 14 vorgesehen, welche aber auch in die Stromreglung 8 des Gleichspannungs-Wandlers 7 oder die Wechselrichter-Regelung 5 des Wechselrichters 4 integriert werden kann. Die Maximum-Power-Point-Regelung 14 gibt der Stromreglung 8 des Gleichspannungs-Wandlers 7 Stromsollwerte vor, und ermöglicht je nach Energiestatus des Solarsystems 17 eine höchstmögliche elektrische Leistungsausbeute. Die Maximum-Power-Point-Regelung 14 kann in Kombination mit der Energieeinspeisevorrichtung 1 auch für die Einspeisung von elektrischer Energie aus weiteren, insbesondere regenerativen Energiequellen zum Einsatz kommen. Weiterhin ist in der in FIG 2 dargestellten Ausführungsform der Energieeinspeisevorrichtung 1 eine Vorladeerweiterung 13 in Reihe mit der Kapazität C₅ des Gleichspannungs-Zwischenkreises 6 im Wechselrichter 4 implementiert. Diese Vorladeerweiterung 13 besteht aus einer Parallelschaltung von Vorladewiderstand R und Überbrückungsrelais-Schaltkontakt Q. Ziel der Vorladeerweiterung 13 ist der Schutz der Kapazität C₅ vor unzulässig hohen Strömen bei deren Vorladung des Gleichspannungs-Zwischenkreis 6. Der Ladestrom der Kapazität C₅ wird zuerst mittels des Vorladewiderstandes R begrenzt. Mit Erreichen eines für die Kapazität C₅ unkritischen Stromflusses wird der Vorladewiderstand R von dem Überbrückungsrelais-Schaltkontaktes Q überbrückt. Die Steuerung des Überbrückungsrelais-Schaltkontaktes Q wird insbesondere von der Wechselrichter-Regelung 5 des Wechselrichters 4 durchgeführt werden. Die Vorladeerweiterung 13 ist für die Energieeinspeisevorrichtung 1 unabhängig von der Art der angeschlossenen Gleichspannungs-Quelle 16 einsetzbar.

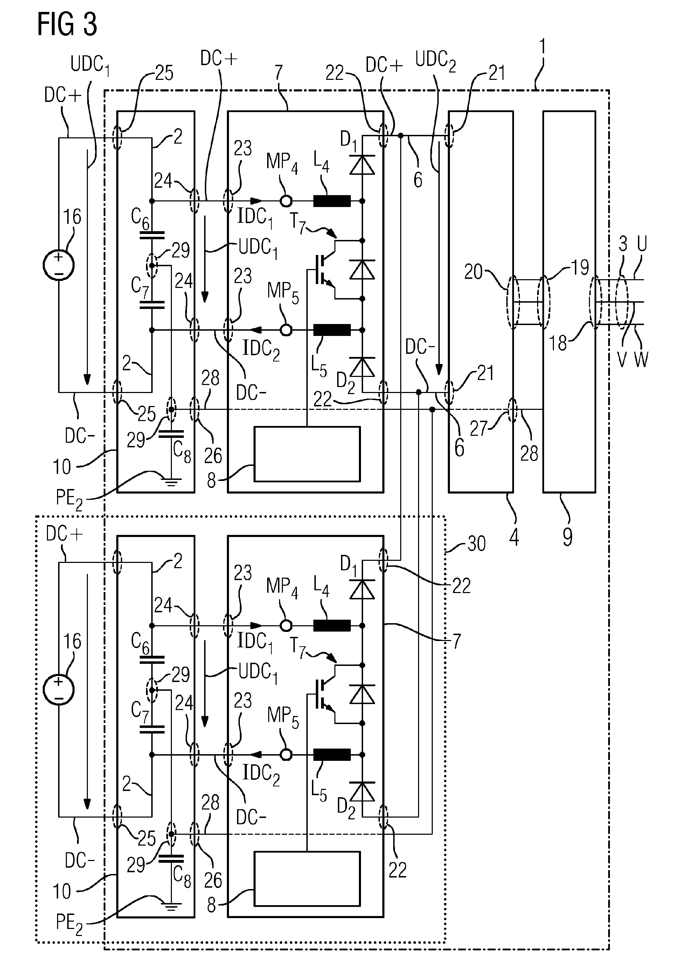

FIG 3 zeigt ein weiteres Schaltbild der Energieeinspeisevorrichtung 1 entsprechend FIG 1, welches einen Parallelbetrieb 10 von mindestens einer weiteren Gleichstrom-Quelle 16 zur Einspeisung von aus regenerativen Energiearten gewonnener elektrischer Energie in das Drehstromnetz 3 darstellt. Der Gleichspannungs-Wandler 7, der Wechselrichter 4 und der Drehstromnetz-Filter 9 werden in FIG 3 nur schematisch gezeigt, entsprechen aber in Aufbau und Funktionalität denen der erfindungsgemäßen Energieeinspeisevorrichtung 1. Die Kopplung der weiteren Gleichstrom-Quelle 16 zum Parallelbetrieb 10 der Einspeisung von elektrischer Energie in das Drehstromnetz 3 erfolgt mittels des gemeinsamen Gleichspannungs-Zwischenkreises 6 der Energieeinspeisevorrichtung 1. Die Kopplung der weiteren Gleichstrom-Quelle 16 bzgl. deren symmetrischer Anbindung an den Drehstromnetz-Sternpunkt 12 des Drehstromnetzes 3 erfolgt mittels der gemeinsamen Sternkopplung 28 der Energieeinspeisevorrichtung 1.

## Patentansprüche

1. Energieeinspeisevorrichtung (1) zur effizienten und elektromagnetisch verträglichen Einspeisung einer von einer Gleichstrom-Quelle (16) in einem Gleichstromnetz (2) bereitgestellten und insbesondere aus regenerativen Energiearten erzeugten elektrischen Energie in ein Drehstromnetz (3), aufweisend:
- einen Drehstromnetz-Filter (9) im Drehstromnetz (3), der ausgehend von dessen Drehstromphasen (U,V,W) über jeweils eine Kapazität (C₁,C₂,C₃) einen Drehstromnetz-Sternpunkt (12) bildet, welcher mit einer weiteren Kapazität (C₄) zur Anbindung an ein Erdpotential (PE₁) vorgesehen ist,
- einen Wechselrichter (4), der zur Umrichtung einer mittels einer Kapazität (C₅) vorgeladenen Zwischenkreis-Gleichspannung (UDC₂) eines Gleichspannungs-Zwischenkreises (6) in entsprechende Wechselspannungen (UAC₁, UAC₂, UAC₃) des Drehstromnetzes (3) vorgesehen ist,
- einen Gleichspannungs-Wandler (7), der zur Wandlung einer Gleichspannung (UDC₁) des Gleichstromnetzes (2) in die Zwischenkreis-Gleichspannung (UDC₂) des Gleichspannungs-Zwischenkreises (6) vorgesehen ist,
- einen Gleichstromnetz-Filter (10) im Gleichstromnetz (2), der mittels zweier zwischen den Gleichstromphasen (DC+,DC-) angeordneter Kapazitäten (C₆,C₇) einen Abgriff für einen Gleichstromnetz-Sternpunkt (29) bildet, welcher über eine weitere Kapazität (C₈) zur Verbindung mit einem Erdpotential (PE₂) vorgesehen ist und
- eine Sternpunktkopplung (28) zwischen dem Gleichstromnetz-Sternpunkt (29) und dem Drehstromnetz-Sternpunkt (12), die zur symmetrischen Anbindung der Gleichstrom-Quelle (16) im Gleichstromnetz (2) an den Drehstromnetz-Sternpunkt (12) des Drehstromnetzes (3) vorgesehen ist.

2. Energieeinspeisevorrichtung (1) nach Anspruch 1, wobei eine Verbindung der Drehstromphasen (U,V,W) des Drehstromnetzes (3) mit einem ersten Anschluss (18) der Drehstromphasen (U, V,W) des Drehstromnetz-Filters (9) vorgesehen ist, eine Verbindung der Drehstromphasen (U,V,W) eines zweiten Anschlusses (19) des Drehstromnetz-Filters (9) mit einem ersten Anschluss (20) der Drehstromphasen (U,V,W) des Wechselrichters (4) vorgesehen ist, eine Verbindung der Gleichstromphasen (DC+,DC-) eines zweiten Anschlusses (21) des Wechselrichters (4) mit einem ersten Anschluss (22) der Gleichstromphasen (DC+,DC-) des Gleichspannungs-Wandlers (7) vorgesehen ist, eine Verbindung der Gleichstromphasen (DC+,DC-) eines zweiten Anschlusses (23) des Gleichspannungs-Wandlers (7) mit einem ersten Anschluss (24) der Gleichstromphasen (DC+,DC-) des Gleichstromnetz-Filters (10) vorgesehen ist, eine Verbindung eines zweiten Anschlusses (25) der Gleichstromphasen (DC+,DC-) des Gleichstromnetz-Filters (10) mit den Gleichstromphasen (DC+, DC-) des Gleichstromnetz (2) und der darin enthaltenen Gleichstromquelle (16) vorgesehen ist und die Sternpunktkopplung (28) zwischen dem Gleichstromnetz-Sternpunkt (29) und dem Drehstromnetz-Sternpunkt (12) jeweils über einen dritten Anschluss (26,27) des Gleichstromnetz-Filters (10) und des Drehstromnetz-Filters (9) vorgesehen ist.

3. Energieeinspeisevorrichtung (1) nach einem der Ansprüche 1 oder 2, wobei im Wechselrichter (4) am Gleichspannungs-Zwischenkreises (6) eine Vorladeerweiterung (13) vorgesehen ist, die eine Parallelschaltung aus einem Vorladewiderstand (R) und einem, insbesondere von der Wechselrichter-Regelung (5) des Wechselrichters (4) ansteuerbaren Überbrückungsrelais-Schaltkontakt (Q) aufweist und in Reihe mit der Kapazität (C₅) zwischen den beiden Gleichstromphasen (DC+,DC-) des Gleichspannungs-Zwischenkreises (6) im Wechselrichter (4) liegt.

4. Energieeinspeisevorrichtung (1) nach einem der Ansprüche 1 bis 3, wobei in den Drehstromphasen (U,V,W) des Wechselrichters (4) jeweils ein Strommesspunkt (MP₁,MP₂,MP₃) zur Messung der entsprechenden Wechselströme (IAC₁, IAC₂, IAC₃) sowie jeweils eine Induktivität (L₁, L₂, L₃) vorgesehen sind.

5. Energieeinspeisevorrichtung (1) nach einem der Ansprüche 1 bis 4, wobei insbesondere im Wechselrichter (4) eine Wechselrichter-Regelung (5) für die Regelung der Zwischenkreis-Gleichspannung (UDC₂) und der entsprechenden Wechselströme (IAC₁, IAC₂, IAC₃) in den Drehstromphasen (U,V,W) des Wechselrichters (4) vorgesehen ist.

6. Energieeinspeisevorrichtung (1) nach einem der Ansprüche 1 bis 5, wobei der Wechselrichter (4) von der Wechselrichter-Regelung (5) angesteuerte aktive Leistungshalbleiter (T₁, T₂, T₃, T₄, T₅, T₆) aufweist, für die insbesondere hochfrequent schaltbare Leistungshalbleiter, wie SiC-JFETs und/oder SiC-MOSFETs, vorgesehen sind.

7. Energieeinspeisevorrichtung (1) nach einem der Ansprüche 1 bis 6, wobei in den Gleichstromphasen (DC+,DC-) des Gleichspannungs-Wandlers (7) jeweils ein Strommesspunkt (MP₄, MP₅) zur Messung der entsprechenden Gleichströme (IDC₁, IDC₂), jeweils eine Induktivität (L₄, L₅) sowie jeweils ein, insbesondere passiver, Leistungshalbleiter (D₁, D₂) vorgesehen sind.

8. Energieeinspeisevorrichtung (1) nach einem der Ansprüche 1 bis 7, wobei insbesondere im Gleichspannungs-Wandler (7) eine Stromregelung (8) für die Regelung der Gleichströme (IDC₁, IDC₂) in den Gleichstromphasen (DC+,DC-) des Gleichspannungs-Wandler (7) vorgesehen ist.

9. Energieeinspeisevorrichtung (1) nach einem der Ansprüche 1 bis 8, wobei für die Stromregelung (8) des Gleichspannungs-Wandlers (7) ein Hysterese-Stromregler (15) vorgesehen ist.

10. Energieeinspeisevorrichtung (1) nach einem der Ansprüche 1 bis 9, wobei der Gleichspannungs-Wandler (7) zwischen den Gleichstromphasen (DC+,DC-) mindestens einen, von der Stromregelung (8) angesteuerten aktiven Leistungshalbleiter (T₇) aufweist, für den insbesondere hochfrequent schaltbare Leistungshalbleiter, SiC-JFETs oder SiC-MOSFETs, vorgesehen sind.

11. Energieeinspeisevorrichtung (1) nach einem der Ansprüche 1 bis 10, wobei mindestens eine weitere Gleichstrom-Quelle (16) in ihrem jeweiligen Gleichstromnetz (2) über einen weiteren Gleichstromnetz-Filter (10) und einen weiteren Gleichspannungs-Wandler (7) für einen Parallelbetrieb (30) der Gleichstrom-Quellen (16) an dem Gleichstrom-Zwischenkreis (6) des Wechselrichters (4) mittels einer Verbindung mit dessen zweiten Anschluss (21) vorgesehen sind.

12. Energieeinspeisevorrichtung (1) nach einem der Ansprüche 1 bis 11, wobei für den Parallelbetrieb (30) der Gleichstrom-Quellen (16) am Gleichstrom-Zwischenkreis (6) des Wechselrichters (4) mittels der Sternpunktkopplung (28) die Gleichstromnetz-Sternpunkte (29) der weiteren Gleichstromnetz-Filter (10) zur Verbindung mit dem Drehstromnetz-Sternpunkt (12) vorgesehen sind.

13. Energieeinspeisevorrichtung (1) nach den Ansprüchen 1 bis 12, wobei eine übergeordnete Maximum-Power-Point-Regelung (14), welche zur Findung und Ausregelung des Punktes der maximalen Leistung von Gleichstrom-Quellen (16) am Gleichstromnetz (2) eingesetzt wird, für die Vorgabe eines Stromsollwerts an die Stromreglung (8) des Gleichspannungs-Wandler (7) vorgesehen ist.

14. Energieeinspeisevorrichtung (1) nach den Ansprüchen 1 bis 13, wobei die Energieeinspeisevorrichtung (1) zur Anbindung von regenerativen Gleichstrom-Quellen (16) im Gleichstromnetz (2) an das Drehstromnetz (3) insbesondere für ein Solarsystem (17) als Gleichstrom-Quelle (16) vorgesehen ist.

15. Energieeinspeisevorrichtung (1) nach den Ansprüchen 1 bis 14, wobei die Energieeinspeisevorrichtung (1) zur Einspeisung beziehungsweise zur Umwandlung von elektrischer Energie aus dem Drehstromnetz (3) in das Gleichstromnetz (2), insbesondere zur Aufladung eines allein oder in Verbindung mit ein oder mehreren Gleichstrom-Quellen (16) eingesetzten elektrischen Energiespeichers (11), vorgesehen ist.
